# EUROPEAN PATENT APPLICATION

(11) **EP 2 693 389 A1**
(43) Date of publication of application: **05.02.2014**
(21) Application number: 11862136.6
(22) Date of filing: 31.03.2011
(51) Int. Cl.: G06Q 50/00

(54) **EMISSION-AMOUNT PROCESSING SYSTEM, EMISSION-AMOUNT PROCESSING APPARATUS, AND EMISSION-AMOUNT PROCESSING METHOD**

(71) Applicant: The Japan Research Institute, Limited, Tokyo 102-0082 (JP)
(72) Inventor: FUKUHARA, Makoto, Tokyo 102-0082 (JP)
(74) Representative: Thibon, Laurent
(86) International application number: PCT/JP2011/058239
(87) International publication number: WO 2012/131984

(57) **Abstract**

There is provided with an emitting amount processing system that can perform the trade of emitting amount, virtually in a sense, among plural companies configuring a group. The emitting amount system includes an emitting amount processing apparatus 1 that is connected through a first communication network 3 to each of communication apparatuses 2 regarding plural companies configuring a group, and processes emitting amount information representing the emitting allowances of greenhouse gas for the respective plural companies. The emitting amount processing apparatus 1 includes a storing unit that stores the emitting amount information representing the emitting allowance of greenhouse gas regarding each company in association with the company ID for each of plural companies. A communication apparatus 2 of one company accepts emitting amount purchase information representing the emitting amount regarding the emitting allowance of greenhouse gas to be purchased from another company, and sends the emitting amount purchase information and its own company ID to the emitting amount processing apparatus 1. The emitting amount processing apparatus 1 receives several information sent from the communication apparatus 2, adds the emitting amount to be purchased to the emitting amount of one company, and subtracts the emitting amount to be sold from the emitting amount of another company.

## Description

### [Technical Field]

The present invention relates to an emitting amount processing system, an emitting amount processing apparatus and an emitting amount processing method that can process emitting amount information regarding the emitting allowance of greenhouse gas assigned to each of plural entities configuring a group.

### [Background Art]

The trade of emitting amount is introduced as one of countermeasure for the global warming. In the trade of emitting amount, the concept of emitting allowance (emitting right, allowable emitting amount) is introduced in order to reduce the emitting amount of greenhouse gas, such as carbon dioxide and methane. The emitting allowance is for showing the cost corresponding to the greenhouse gas emission, and the price is applied to the greenhouse gas emission as the trading object. It is expected by showing the cost of the greenhouse gas emission that the incentive is given to companies to reduce the greenhouse gas emission. Each company compares the cost required by its own effort for reducing the emitting amount of greenhouse gas and the cost required for purchasing the extra of emitting allowance generated by the emitting reduction of another company, and selects the one of lower cost. Each company can trade the extra of emitting allowance or the shortage of emitting allowance with other company. Thus, it is considered that the reduction of greenhouse gas emission can be implemented effectively with the lower cost as a whole.

While, a system that implements trading the emitting allowance of greenhouse gas in the online market is disclosed as for the technique improving the trade of emitting allowance (e.g., Patent Document 1). In addition, a system is disclosed to summarize and transfer the little reduction amount of carbon dioxide implemented by plural specific equipments (e.g., Patent Document 2).

### [Prior Technical Document]

### [Patent Document]

[Patent Document 1] Japanese Patent Application Laid-Open No. 2010-61685
[Patent Document 2] Japanese Patent Application Laid-Open No. 2005-196583

### [Summary of the Invention]

### [Problems to be Solved by the Invention]

However, each company in the conventional system carries out the trade of emitting amount independently, even when plural companies assigned with the emitting allowances of greenhouse gas configure one group. Thus, each company in the conventional system independently needs building the infrastructure for trading the emitting amount. Furthermore, the conventional system has a problem that a company having less creditworthy hardly trades the emitting amount with avoiding several risks.

The present invention is made in view of such a circumstance, and has an object to provide an emitting amount processing system, an emitting amount processing apparatus and an emitting amount processing method, in which one company centrally manages the emitting allowances of greenhouse gas assigned to respective plural companies configuring one group, the trade of emitting amount among the plural companies is implemented virtually in a sense, and one company can actually trade the emitting amount as the representative of this group with a company outside of this group.

### [Means for Solving Problems]

An emitting amount processing system according to the present invention has communication apparatuses that relate respectively to plural entities, and has an emitting amount processing apparatus that is connected to each of the communication apparatuses through a communication network and processes emitting amount information representing emitting allowances of greenhouse gas respectively regarding the plural entities, wherein the emitting amount processing apparatus comprises a storing means for storing emitting amount information representing an emitting allowance of greenhouse gas regarding each entity, in association with identification information identifying each of the plural entities; each of the communication apparatuses comprises a means for accepting emitting amount purchase information representing an emitting amount regarding an emitting allowance of greenhouse gas purchased from an entity regarding another of the communication apparatuses, and a means for sending the accepted emitting amount purchase information and its own identification information to the emitting amount processing apparatus; and the emitting amount processing apparatus further comprises a means for receiving the emitting amount purchase information and the identification information sent from the communication apparatus, a means for adding an emitting amount represented by the received emitting amount purchase information to an emitting amount represented by emitting amount information associated with the received identification information, and a means for subtracting an emitting amount represented by the received emitting amount purchase information from an emitting amount represented by emitting amount information associated with identification information of said another of the communication apparatuses.

The emitting amount processing system according to the present invention has the emitting amount processing apparatus that comprises a means for storing a cost required by each entity for procuring a predetermined amount of emitting allowance and a means for sending information, to one of the communication apparatuses, representing a cost required for procuring a predetermined amount of emitting allowance by an entity regarding another of the communication apparatuses.

The emitting amount processing system according to the present invention has the emitting amount processing apparatus that comprises a means for sending information, to said one of the communication apparatuses, as for suggesting said another of the communication apparatuses in a lower order of the cost.

The emitting amount processing system according to the present invention has the emitting amount processing apparatus that comprises a means for accepting emitting amount information representing an emitting amount purchased from an entity out of the plural entities and an adding means for dividing an emitting amount represented by the accepted emitting amount information and adding to an emitting amount represented by emitting amount information associated with the identification information of the plural entities.

The emitting amount processing system according to the present invention has the emitting amount processing apparatus that comprises a means for accepting emitting amount information representing an emitting amount sold to an entity out of the plural entities and a means for dividing an emitting amount represented by the accepted emitting amount information and subtracting from an emitting amount represented by emitting amount information associated with the identification information of the plural entities.

An emitting amount processing apparatus according to the present invention processes emitting amount information representing emitting allowances of greenhouse gas regarding plural entities; and comprises a storing means for storing emitting amount information representing an emitting allowance of greenhouse gas regarding each entity, in association with identification information identifying each of the plural entities, a means for receiving identification information of one of the plural entities and for receiving emitting amount purchase information representing an emitting amount regarding an emitting allowance of greenhouse gas purchased from another of the plural entities, a means for adding an emitting amount represented by the received emitting amount purchase information to an emitting amount represented by emitting amount information associated with the received identification information of said one of the entities, and a means for subtracting an emitting amount represented by the received emitting amount purchase information from an emitting amount represented by emitting amount information associated with identification information of said another of the plural entities.

An emitting amount processing method according to the present invention is for processing emitting amounts of plural entities, by making use of communication apparatuses that relate respectively to the plural entities and an emitting amount processing apparatus that is connected to each of the communication apparatuses through a communication network and processes emitting amount information representing an emitting amount regarding greenhouse gas assigned to each of the plural entities, wherein the emitting amount processing apparatus comprises a step of storing emitting amount information representing an emitting allowance of greenhouse gas regarding each entity in association with identification information identifying each of the plural entities, into a storing means; each of the communication apparatuses comprises a step of accepting emitting amount purchase information representing an emitting amount regarding an emitting allowance of greenhouse gas purchased from an entity regarding another of the communication apparatuses, and a step of sending the accepted emitting amount purchase information and its own identification information to the emitting amount processing apparatus; and the emitting amount processing apparatus further comprises a step of receiving the emitting amount purchase information and the identification information sent from the communication apparatus, a step of adding an emitting amount represented by the received emitting amount purchase information to an emitting amount represented by emitting amount information associated with the received identification information, and a step of subtracting an emitting amount represented by the received emitting amount purchase information from an emitting amount represented by emitting amount information associated with identification information of said another of the communication apparatuses.

In the present invention, an emitting amount processing apparatus comprises a storing means for storing emitting amount information representing an emitting allowance of greenhouse gas regarding each entity, in association with identification information for identifying plural entities, such as companies, configuring a group. The emitting amount processing apparatus centrally manages the emitting allowances of greenhouse gas regarding the plural entities configuring the group, based on information stored by the storing means, and implements the virtual trade of emitting amount among the entities configuring the group.

The communication apparatus regarding one of the entities accepts emitting amount purchase information representing the emitting amount regarding the emitting allowance of greenhouse gas purchased from another of the entities, and sends the accepted emitting amount purchase information and its own identification information to the emitting amount processing apparatus. The emitting amount processing apparatus receives the emitting amount purchase information and the identification information sent from the communication apparatus regarding said one of the entities, adds an emitting amount represented by the received emitting amount purchase information to an emitting amount represented by emitting amount information associated with the received identification information, i.e., to an emitting amount assigned to said one of entities, and subtracts an emitting amount represented by emitting amount purchase information received from an emitting amount regarding another of the entities. Because of processing described above, it is possible to implement the trade of emitting amounts between one and another of the entities, based on the management of emitting amount processing apparatus.

In the present invention, information representing the procurement cost required by another of entities for a predetermined amount of emitting allowance is sent to one of the communication apparatuses regarding an entity who prepares to procure an emitting allowance. Therefore, said one of the communication apparatuses can purchase the extra of emitting allowance from an entity whose procurement cost is lower. In other words, it is possible to direct the asset value regarding the whole of plural entities toward the maximum, through selecting the source for procuring the emitting allowance.

In the present invention, information for suggesting another of the communication apparatuses in a lower order of the cost required for purchasing a predetermined amount of emitting allowance is sent to said one of the communication apparatuses. Therefore, said one of communication apparatus can easily identify an entity whose cost for procuring the emitting allowance is lower, and thus it is possible to direct the asset value regarding the whole of the plural entities.

In the present invention, when a representative entity of the group has purchased the emitting allowance regarding greenhouse gas required for the whole of this group, the emitting amount processing apparatus accepts the emitting amount information representing an emitting amount purchased from the outside of this group. Then, the emitting amount processing apparatus divides the emitting amount represented by the accepted emitting amount information, and adds to the emitting amount represented by the emitting amount information associated with the identification information of the plural entities.

In the present invention, when a representative entity of the group has sold the extra of emitting allowances regarding greenhouse gas for the whole of this group, the emitting amount processing apparatus accepts the emitting amount information representing an emitting amount sold to the outside of this group. Then, the emitting amount processing apparatus divides the emitting amount represented by the accepted emitting amount information, and subtracts from the emitting amount information associated with the identification information of the plural entities.

### [Effects of the Invention]

In accordance with the present invention, it is possible to trade, virtually in a sense, the emitting amount among plural entities, such as companies, configuring a group and to make one entity as the representative of this group substantively perform the emitting amount trade with entities outside of this group, by the central management of the one entity for the emitting allowances of greenhouse gas assigned to respective entities.

The extra and shortage of emitting allowance can be recognized with the emitting amount and the procurement cost. It is possible to implement the lower procurement cost, due to the flexibility of emitting allowances in companies belonging to one group. It is possible to increase the trading amount because the extra or shortage of emitting allowances regarding entities in this group is compiled. Therefore, it is possible to set an advantageous term for the trade.

### [Brief Description of the Drawings]

FIG. 1 is a block diagram showing an example configuration of an emitting amount processing system according to an embodiment of the present invention.
FIG. 2 is a block diagram showing an example configuration of an emitting amount processing apparatus according to the present embodiment.
FIG. 3 is an explanation view conceptually showing an example of record layout regarding an emitting amount management table.
FIG. 4 is a flowchart showing a procedure regarding an emitting amount management.
FIG. 5 is an explanation view conceptually showing an assigning process of emitting amount.
FIG. 6 is an explanation view conceptually showing a predicting process of emitting amount.
FIG. 7 is an explanation view conceptually showing a measuring process of emitting amount.
FIG. 8 is a flowchart showing a procedure regarding a trade of emitting amount with a company out of a group.
FIG. 9 is a flowchart showing a procedure regarding a virtual trade of emitting amount among companies configuring the group.
FIG. 10 is an explanation view conceptually showing the virtual trade of emitting amount among companies configuring the group.
FIG. 11 is a flowchart showing a procedure of a control unit regarding an assigning management.
FIG. 12 is an explanation view conceptually showing an example of record layout regarding the emitting amount management table according to an alternative embodiment 1.
FIG. 13 is a flowchart showing a procedure regarding the virtual trade of emitting amount in the alternative embodiment 1.
FIG. 14 is an explanation view conceptually showing a prospect regarding the extra and shortage of emitting amount in each company and showing an asset value of emitting amount.
FIG. 15 is a schematic view conceptually showing a list of purchase sources in which company names are sorted in a lower order of purchase cost for the emitting allowance.
FIG. 16A is an explanation view conceptually showing the asset value of emitting amount after the trade of emitting allowance.
FIG. 16B is an explanation view conceptually showing the asset value of emitting amount after the trade of emitting allowance.

### [Best Mode for Carrying Out the Invention]

The present invention will be described below in reference to drawings that show embodiments according to the present invention.

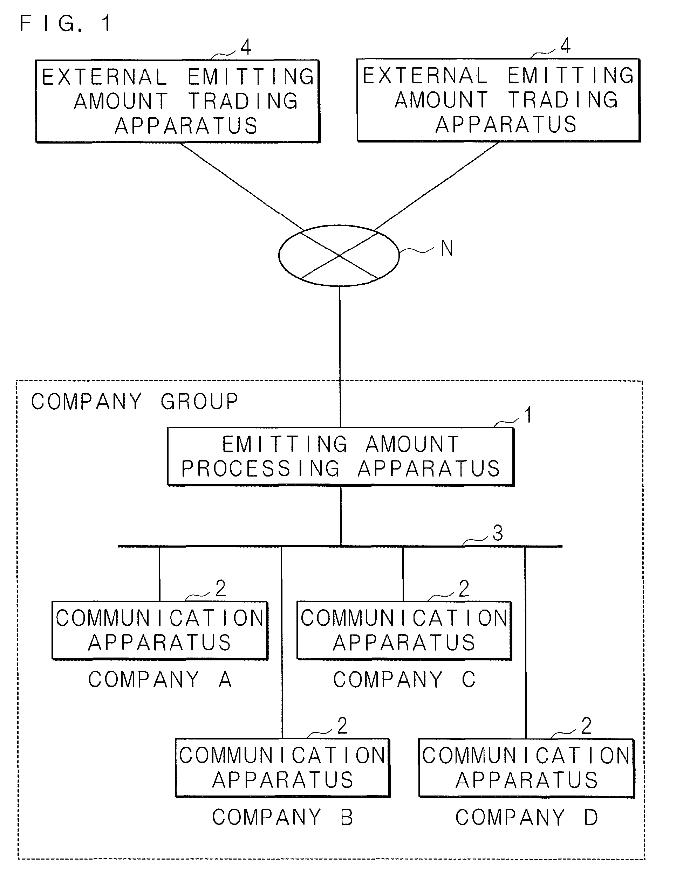

FIG. 1 is a block diagram showing an example configuration of an emitting amount processing system according to an embodiment of the present invention. The emitting amount processing system according to the embodiment of the present invention includes communication apparatuses 2 that are respectively for plural companies (entities) configuring a group, and includes an emitting amount processing apparatus 1 that is connected to each communication apparatus 2 through a first communication network 3 and processes emitting amount information representing emitting allowances of greenhouse gas regarding the plural companies. In addition, the emitting amount processing apparatus 1 is connected through a second communication network N to external emitting amount trading apparatuses 4 regarding companies outside of the group.

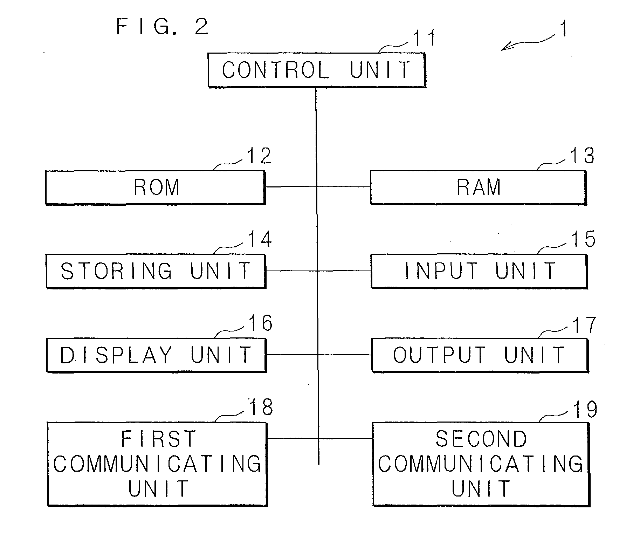

FIG. 2 is a block diagram showing an example configuration of the emitting amount processing apparatus 1 according to the present embodiment. The emitting amount processing apparatus 1 is a computer including a control unit 11, such as CPU (Central Processing Unit), which controls the whole apparatus. The control unit 11 is connected through a bus to a ROM 12, a RAM 13, a storing unit 14, an input unit 15, a display unit 16, an output unit 17, a first communicating unit 18 and a second communicating unit 19.

The ROM 12 is a non-volatile memory, such as mask ROM or EEPROM, which stores a control program required for operating the computer.

The RAM 13 is a volatile memory, such as DRAM or SRAM, which temporarily stores several data generated during the calculating process performed by the control unit 11.

The storing unit 14 is, for example, a hard disk or flash memory, and stores a computer program for operating the computer as the emitting amount processing apparatus 1 according to the present embodiment, an emitting amount management table for managing emitting amounts assigned to respective companies configuring the group, and the like. In addition, the storing unit 14 stores a computer program for sending and receiving information with the communication apparatuses 2, for example, stores a communication module that sends and receives several information with HTTP (hypertext transfer protocol) and the like. Furthermore, the storing unit 14 stores a computer program for implementing web server function. The control unit 11 can perform the emitting amount processing method according to the present invention by reading out the computer program and several information stored by the storing unit 14 onto the RAM 13 and executing them.

The input unit 15 is an inputting device, such as a keyboard or mouse, for manipulating the emitting amount processing apparatus 1.

The display unit 16 is a display device, such as a liquid crystal display, organic EL display or CRT.

The first communicating unit 18 is an interface that sends and receives several information regarding the trade of emitting amounts with the respective communication apparatuses 2 of plural companies configuring the group. The transmission of several information performed by the first communicating unit 18 is controlled by the control unit 11.

The second communicating unit 19 is an interface that sends and receives several information regarding the trade of emitting amounts with the external emitting amount trading apparatuses 4. The transmission of several information performed by the second communicating unit 19 is controlled by the control unit 11.

The communication apparatus 2 and the external emitting amount trading apparatuses 4 include a control unit, a ROM, a RAM, a storing unit, an input unit, a display unit, a communicating unit, and so on. The hardware configuration of them is similar to that of the emitting amount processing apparatus 1, and the detail explanation is omitted.

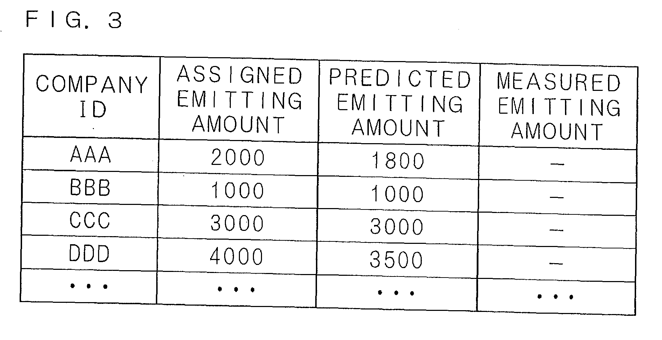

FIG. 3 is an explanation view conceptually showing an example of record layout regarding an emitting amount management table. The emitting amount management table consists of plural columns, for example, a "company ID" column that stores company ID (identification information) for identifying each of companies configuring the group, an "assigned emitting amount" column that stores emitting amount information representing the emitting allowance of greenhouse gas assigned to each company, a "predicted emitting amount" column that stores predicted emitting amount information representing the emitting amount which each company is predicted to emit, a "measured emitting amount" column that stores measured emitting amount information representing the emitting amount emitted actually from each company, and so on.

For example, the unit for the emitting amount regarding the emitting allowance of greenhouse gas assigned to each company may be "ton of CO₂". However, the present invention is not limited to the example.

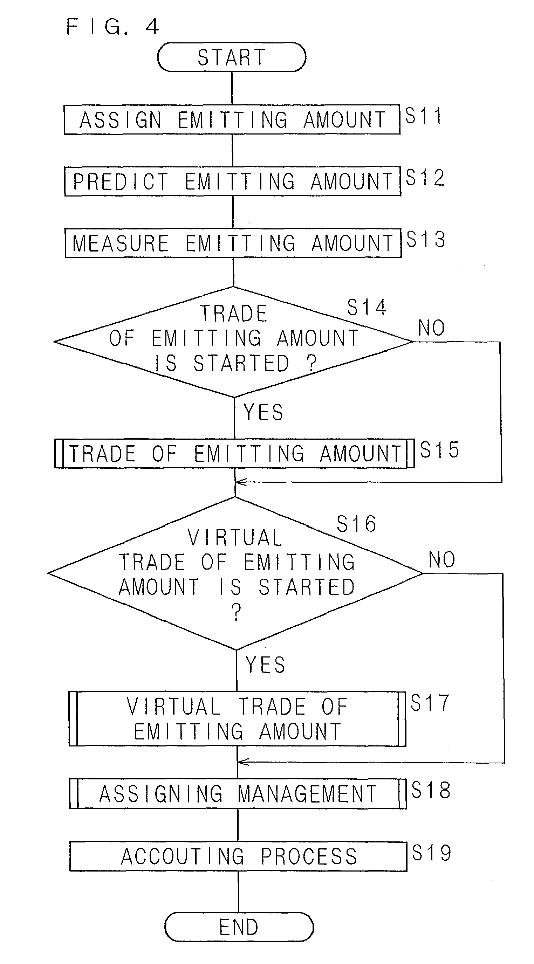

FIG. 4 is a flowchart showing a procedure regarding an emitting amount management. The control unit 11 of the emitting amount processing apparatus 1 assigns the emitting amount regarding greenhouse gas for each of companies configuring the group, and stores emitting amount information representing the assigned emitting amount into the emitting amount management table in association with the company ID (step S11).

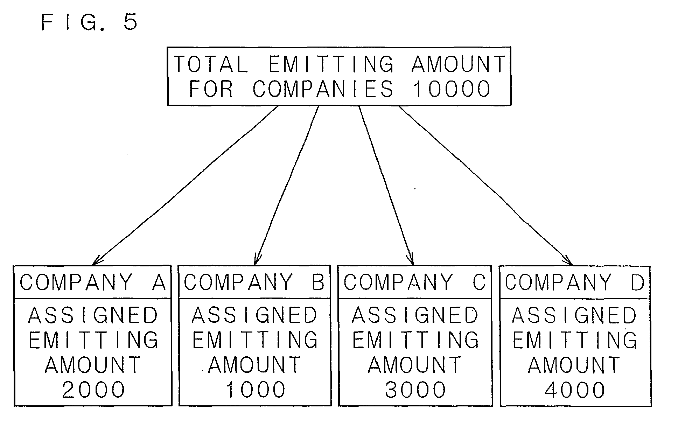

FIG. 5 is an explanation view conceptually showing an assigning process of emitting amount. When the total emitting amount representing all the emitting allowances of greenhouse gas assigned to plural companies configuring the group, e.g., the companies A, B, C and D, is 10000, the emitting allowances 2000, 1000, 3000 and 4000 are respectively assigned to the companies A, B, C and D, based on the business category, past emitting amount, business plan or the like of each company.

Then, each company predicts the emitting amount of greenhouse gas, and utilizes the communication apparatus 2 to send predicted emitting amount information representing the predicted emitting amount of the company to the emitting amount processing apparatus 1. The control unit 11 of the emitting amount processing apparatus 1 receives, by the first communicating unit 18, the predicted emitting amount information, and stores the predicted emitting amount information into the emitting amount management table in association with the company ID (step S12).

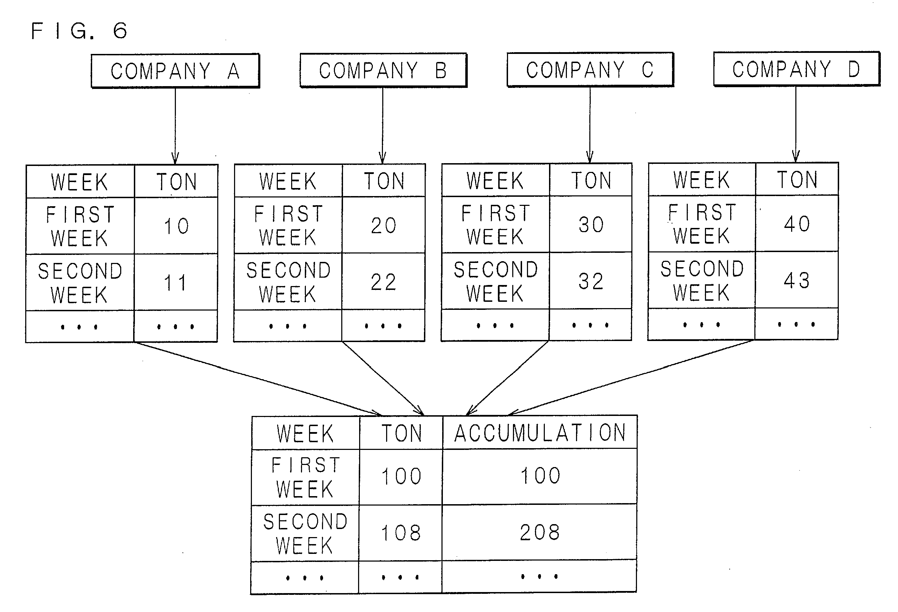

FIG. 6 is an explanation view conceptually showing a predicting process of emitting amount. Once a week, each company performs the prediction of emitting amount by the unit "ton of CO₂". The emitting amount processing apparatus 1 totals the predicted emitting amounts of all the companies, calculates the total value of predicted emitting amounts at every week, the accumulative value of the total values and the like, and stores them into the storing unit 14. For example, because the predicted emitting amounts of respective companies A, B, C and D at the first week are 10, 20, 30 and 40, the total value is 100 and the accumulative value is also 100. Because the predicted emitting amounts of respective companies A, B, C and D at the second week are 11, 22, 32 and 43, the total value is 108 and the accumulative value of first and second weeks is 208. After that, the similar processing is performed at other weeks. The emitting amount processing apparatus 1 can output the total value and accumulative value for the predicted emitting amounts at the display unit 16. A user of the emitting amount processing apparatus 1 can predict the extra and shortage of emitting amount at the future for the whole of group, in reference to the accumulative value of predicted emitting amounts, and can determine purchasing or selling the emitting amount from or to a company outside this group.

Then, each company measures actually the emitting amount of greenhouse gas, and utilizes the communication apparatus 2 to send measured emitting amount information representing the measured emitting amount to the emitting amount processing apparatus 1. The control unit 11 of the emitting amount processing apparatus 1 receives the measured emitting amount information by the first communicating unit 18, and stores the measured emitting amount information into the emitting amount management table in association with the company ID (step S13).

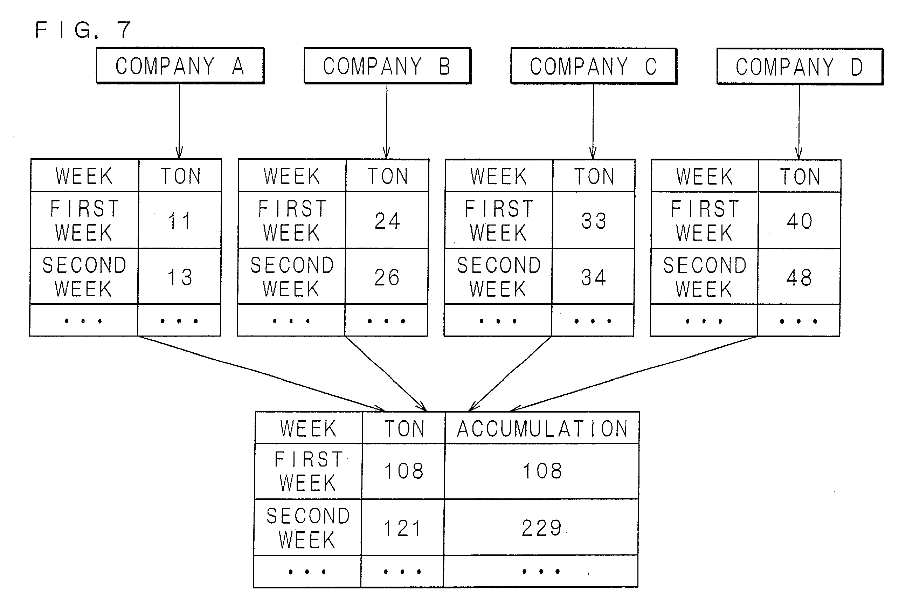

FIG. 7 is an explanation view conceptually showing a measuring process of emitting amount. Each company measures the emitting amount once a week by the unit "ton of CO₂". The emitting amount processing apparatus 1 totals the measured emitting amounts of all the companies, calculates the total value of measured emitting amounts at every week, the accumulative value of the total values and the like, and stores them into the storing unit 14. For example, because the measured emitting amounts of respective companies A, B, C and D at the first week are 11, 24, 33 and 40, the total value is 108 and the accumulative value is also 108. Because the measured emitting amounts of respective companies A, B, C and D at the second week are 13, 26, 34 and 48, the total value is 121 and the accumulative value of first and second weeks is 229. After that, the similar processing is performed at other weeks. At the display unit 16, the emitting amount processing apparatus 1 can output the total value and accumulative value for the measured emitting amounts. A user of the emitting amount processing apparatus 1 can modify the prediction of required emitting amount for the whole of this group, in reference to the accumulative value of measured emitting amounts, and can determine purchasing or selling the emitting amount from or to a company outside this group, on the basis of actual past emitting amount.

Then, the control unit 11 monitors the manipulating condition on the input unit 15, and judges whether the trade of emitting amount is started or not (step S14). When having judged that the trade of emitting amount is started (step S14: YES), the control unit 11 performs the processing regarding the trade of emitting amount with the company outside this group (step S15).

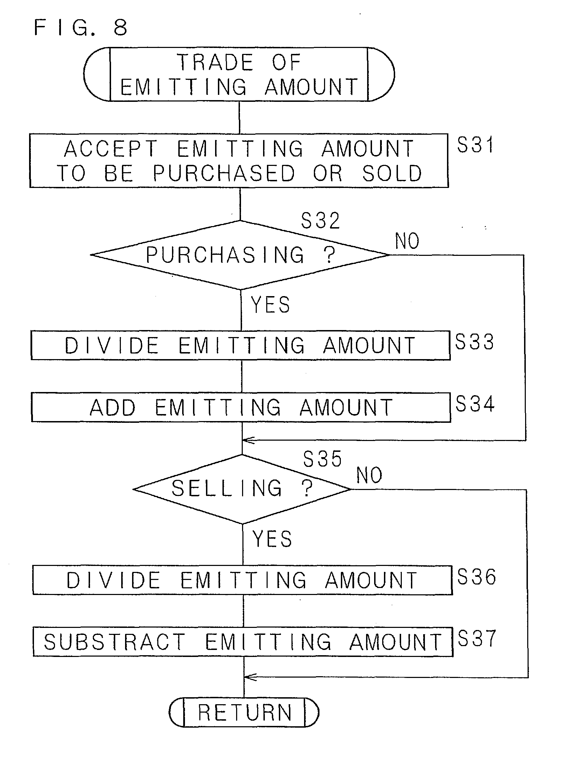

FIG. 8 is a flowchart showing a procedure regarding a trade of emitting amount with a company outside this group. The control unit 11 accepts emitting amount information, by the input unit 15, representing the emitting amount to be purchased from or sold to the company outside this group (step S31). Then, the control unit 11 judges whether the trading content is purchasing the emitting allowance of greenhouse gas or not (step S32). When having judged that the trading content is purchasing the emitting allowance of greenhouse gas (step S32: YES), the control unit 11 divides the emitting amount represented by the emitting amount information accepted at the step S31 (step S33), and adds to the emitting amount represented by the emitting amount information associated with the company ID of plural companies configuring the company group (step S34).

When the process at the step S34 is completed, or when it is judged that the trading content is not purchasing the emitting allowance of greenhouse gas (step S32: NO), the control unit 11 judges whether the trading content is selling the emitting allowance of greenhouse gas or not (step S35). When having judged that the trading content is selling the emitting allowance of greenhouse gas (step S35: YES), the control unit 11 divides the emitting amount represented by the emitting amount information accepted at the step S31 (step S36), subtracts from the emitting amount represented by the emitting amount information associated with the company ID of plural companies configuring the company group (step S37), and ends the procedure.

Returning to FIG. 4, when the process at the step S15 is completed, or when it is judged that the trade of emitting amount is not started (step S14: NO), the control unit 11 monitors the manipulating condition on the input unit 15 and judges whether the virtual trade of emitting amount is started or not (step S16). When having judged that the virtual trade of emitting amount is started (step S16: YES), the control unit 11 performs a process regarding the virtual trade of emitting amount performed among the companies configuring this group (step S17).

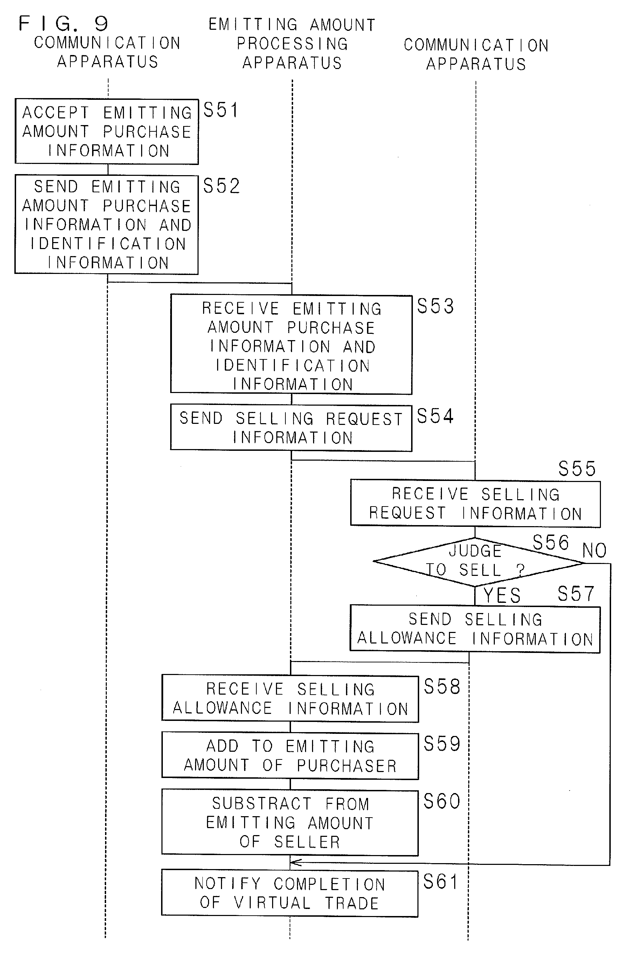

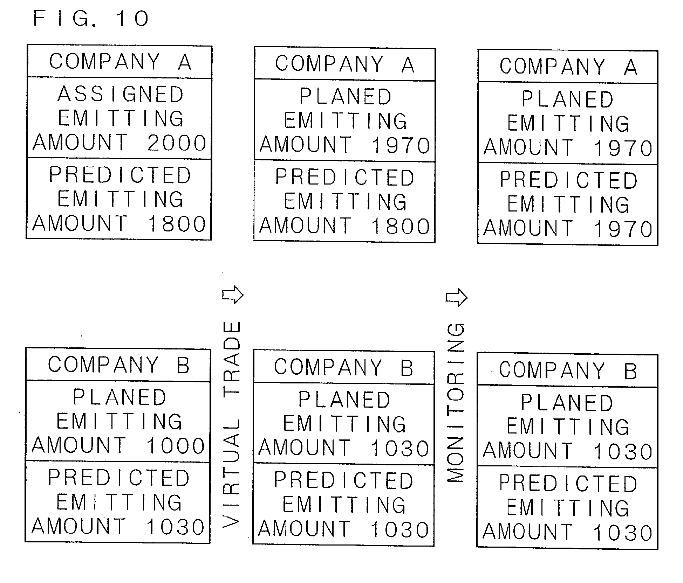

FIG. 9 is a flowchart showing a procedure regarding a virtual trade of emitting amount among companies configuring this group. FIG. 10 is an explanation view conceptually showing the virtual trade of emitting amount among companies configuring this group. The communication apparatus 2 regarding one company configuring this group accepts the emitting amount purchase information representing the emitting amount regarding the emitting allowance of greenhouse gas to be purchased from another company (step S51), and sends the accepted emitting amount purchase information and its own company ID to the emitting amount processing apparatus 1 (step S52).

For example, when the predicted emitting amount of the company B is 1030 although the planed emitting amount of the company B is 1000 as shown in FIG. 10, it causes 30 shortage of emitting amount as for the emitting allowance of greenhouse gas. Thus, the company B considers to purchase 30 emitting amounts from another company A. At that time, the communication apparatus 2 regarding the company B sends the emitting amount purchase information representing 30 emitting amounts regarding the emitting allowance of greenhouse gas to be purchased from said another company A and the company ID of company B, to the emitting amount processing apparatus 1.

The control unit 11 of the emitting amount processing apparatus 1 receives, by the first communicating unit 18, the emitting amount purchase information and the company ID sent from the communication apparatus 2 (step S53). It is not always necessarily to receive the emitting amount information and the company ID at the same time. For example, it may be configured to send the company ID, during the login onto the emitting amount processing apparatus 1, to the emitting amount processing apparatus 1. Furthermore, any information that can associate with the company ID of single company is enough for the company ID sent at the step S53. The present invention is not limited to the detail style of the information.

Then, the control unit 11 sends the selling request information representing the request of selling the emitting amount, to the communication apparatus 2 regarding said another company that wants to sell the emitting amount (step S54). It may be configured that said another company from which the emitting amount is sold is specified by said one company, or automatically specified by the emitting amount processing apparatus 1. In the configuration that said one company specifies the target selling company, the communication apparatus 2 of said one company may be configured to send the company ID of the target selling company to the emitting amount processing apparatus 1, and the emitting amount processing apparatus 1 may be configured to receive the company ID of the target selling company. In the configuration that the emitting amount processing apparatus 1 specifies the target selling company, the control unit 11 may be configured to compare the planned emitting amount, the measured emitting amount and the predicted emitting amount, and to specify a company having enough emitting amount.

The communication apparatus 2 of another company receives the selling request information from the emitting amount processing apparatus 1 (step S55), and judges whether to sell or not (step S56). Said another company decides to sell or not, and inputs the decision with the input device of the communication apparatus 2. Based on the information inputted into the input device, the communication apparatus 2 judges whether to sell or not. When having judged to sell (step S56: YES), the communication apparatus 2 sends the allowance information representing the allowance of selling, to the emitting amount processing apparatus 1 (step S57).

The control unit 11 of the emitting amount processing apparatus 1 receives the allowance information, by the first communicating unit 18, sent from the communication apparatus 2 of another company (step S58). After receiving the allowance information, the control unit 11 adds the emitting amount represented by the received emitting amount purchase information to the emitting amount represented by the emitting amount information associated with the company ID received at the step S53 (step S59). In particular, the control unit 11 reads out, from the emitting amount management table, the emitting amount information associated with the company ID received at the step S53. Then, the control unit 11 adds the emitting amount represented by the emitting amount purchase information received at the step S53 to the emitting amount represented by the read emitting amount information, and stores the emitting amount information representing the emitting amount after the adding process into the emitting amount management table, in association with the company ID.

Then, the control unit 11 subtracts the emitting amount represented by the emitting amount purchase information received at the step S53 from the emitting amount represented by the emitting amount information associated with the company ID of another company (step S60). In particular, the control unit 11 reads out the emitting amount information associated with the company ID of another company from the emitting amount management table, subtracts the emitting amount represented by the emitting amount purchase information received at the step S53 from the emitting amount represented by the read emitting amount information, and stores the emitting amount information representing the emitting amount after the subtracting process into the emitting amount management table, in association with the company ID.

Then, the control unit 11 sends the notification representing that the virtual trade of emitting amount is completed, to the communication apparatuses 2 of respective companies having performed the trade (step S61), and ends the procedure for the virtual trade. In addition, when having judged not to sell at the step S56 (step S56: NO), the control unit 11 sends the notification representing that the virtual trade is completed, to the communication apparatuses 2 of respective companies involved into the trade, without actually trading the emitting amount.

For example, as shown in FIG. 10, the procedure described above can make the company B keep 1030 as the emitting allowance of greenhouse gas, and make the company A keep 1970 as the emitting allowance of greenhouse gas. In the case that the measured emitting amounts of company A and company B are respectively kept to finally become 1970 and 1030, it is not required to purchase the emitting allowance of greenhouse gas for the whole of group, from the company outside this group, and thus it is possible to deal it inside the group.

Returning to FIG. 4, when the process at the step S17 is completed, or when it is judged that the virtual trade of emitting amount is not started (step S16: NO), the control unit 11 performs the process regarding the assigning management of emitting amounts assigned to respective companies (step S18).

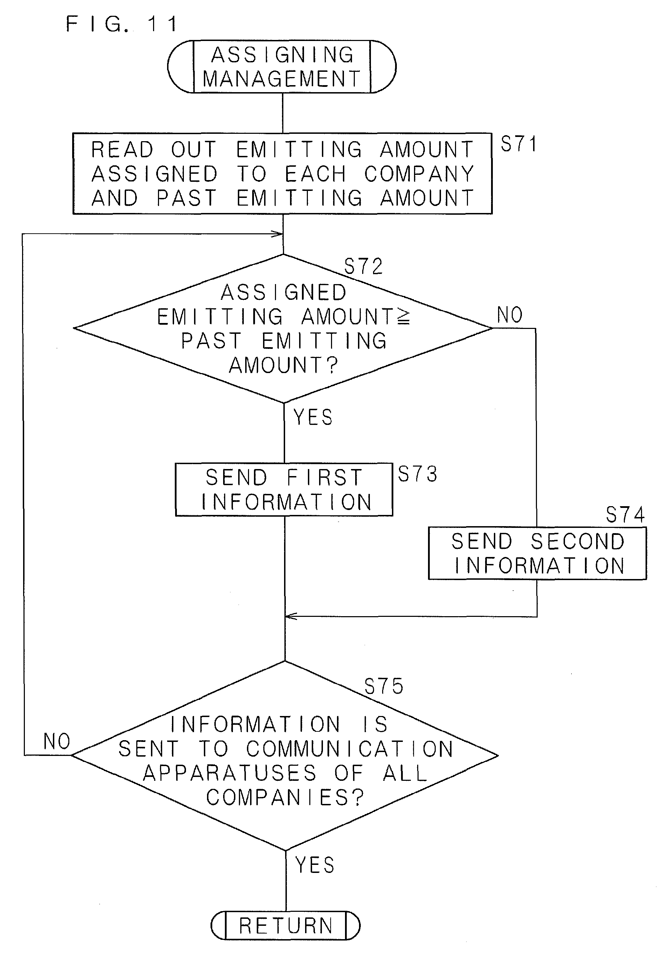

FIG. 11 is a flowchart showing a procedure of the control unit 11 regarding an assigning management. The control unit 11 reads out the emitting amount information and the measured emitting amount information of each company from the emitting amount management table (step S71), and judges on the basis of the read information whether an emitting amount assigned to a company is not less than a past emitting amount or not (step S72). When having judged that the assigned emitting amount is not less than the past emitting amount (step S72: YES), the control unit 11 sends the first information to the communication apparatus 2 of the company that is the target to be judged at the step S72 (step S73). The first information is for the company that has reduced the actual emitting amount to be not more than the assigned emitting amount, and includes information as to give the incentive for further reducing the emitting amount and information, such as report about the emitting amount.

When having judged that the assigned emitting amount is less than the past emitting amount (step S72: NO), the control unit 11 sends the second information to the communication apparatus 2 of the company that is the target to be judged at the step S72 (step S74). The second information is for the company that has not reduced the actual emitting amount to be not more than the assigned emitting amount, and includes information notifying the penalty and information, such as report about the emitting amount. It should be noted that the first information and the second information are described as mere example. Thus, the present invention is not limited to the first and second information described above.

After the completion of the process at the step S73 or step S74, the control unit 11 judges whether or not any one of the first information and second information has been sent to each of communication apparatuses 2 for all the companies (step S75). When having judged that there is a company to which neither of the first information and second information has been sent (step S75: NO), the control unit 11 returns the procedure to the step S72. When having judged that any one of the first information and second information has been sent for all the companies (step S75: YES), the control unit 11 ends the procedure regarding the assigning management.

Returning to FIG. 4, after the completion of the process at the step S 18, the control unit 11 sends the information representing the trade content of the emitting amount to an accounting apparatus if necessary (step S19), and ends the procedure.

With the emitting amount processing system, the emitting amount processing apparatus 1 and the emitting amount processing method configured as described above, one company (e.g., the parent company) can centrally manage the emitting allowances of greenhouse gas assigned to plural companies configuring one group, can trade the emitting amount, virtually in a sense, among the plural companies (e.g., the subsidiary companies) and can become the representative of the group to perform the substantive trade of emitting amount with companies outside the group.

### (Alternative Embodiment1)

The emitting amount processing system according to an alternative embodiment 1 is for suggesting the purchasing source to one company when said one company purchases the emitting allowance from another company, and the suggested purchasing source is for maximizing the gross asset regarding the emitting allowances of plural companies configuring one group.

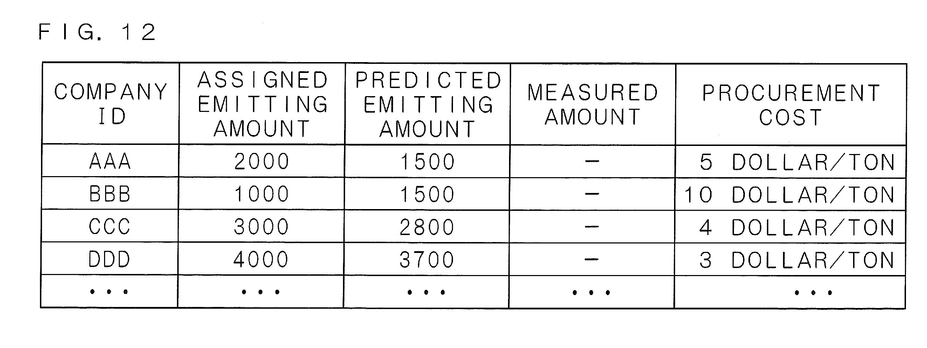

FIG. 12 is an explanation view conceptually showing an example of record layout regarding the emitting amount management table according to the alternative embodiment 1. The storing unit 14 of the emitting amount processing apparatus 1 according to the alternative embodiment 1 stores an emitting amount management table similar to that in the present embodiment described above. The emitting amount management table further consists of a "procurement cost" column that stores the cost required for procuring the unit of emitting allowance in the country where each company is located (hereinafter, called as procurement cost), in addition to the "company ID" column, the "assigned emitting amount" column, the "predicted emitting amount" column, the "measured emitting amount" column, and so on.

The first communicating unit 18 is connected to an external apparatus that sends information regarding the procurement cost of emitting allowance in each country. The emitting amount processing apparatus 1 receives the information regarding the procurement cost of emitting allowance in each country through the first communication unit 18 from the external apparatus, and stores it into the emitting amount management table. Alternatively, the emitting amount processing apparatus 1 may be configured to accept the procurement cost of each country inputted by the input unit 15, and store it into the emitting amount management table.

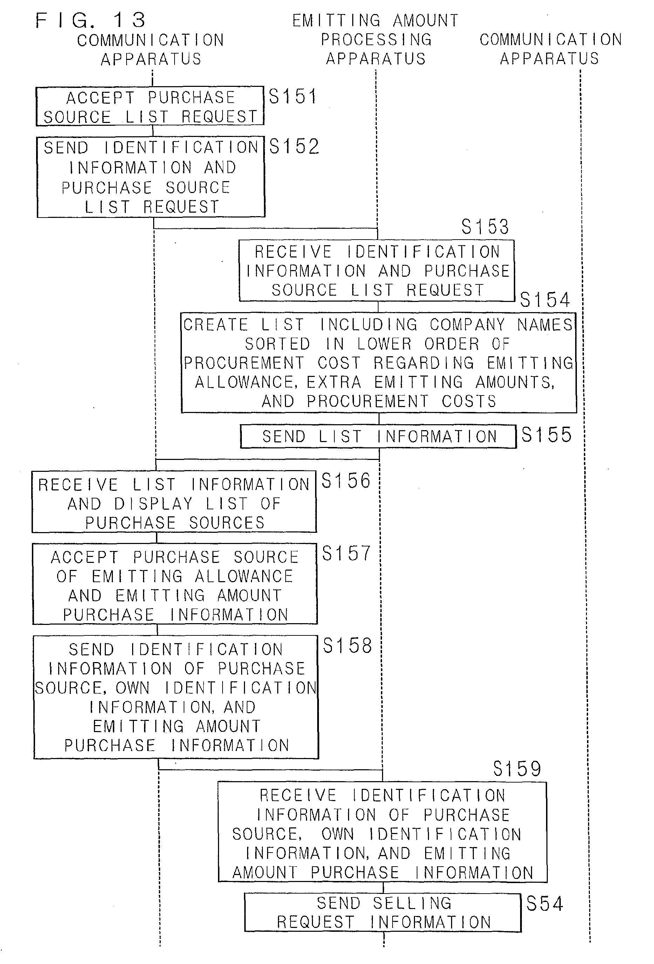

FIG. 13 is a flowchart showing a procedure regarding the virtual trade of emitting amount in the alternative embodiment 1. The communication apparatus 2 regarding one of companies configuring the group accepts the request of source list for purchasing the emitting allowance (step S151). Then, the communication apparatus 2 sends its own company ID and the purchase source list request that is information for requesting the purchase source list, to the emitting amount processing apparatus 1 (step S152).

By the first communicating unit 18, the control unit 11 of the emitting amount processing apparatus 1 receives the company ID and the purchase source list request sent from the communication apparatus 2 (step S153). Based on the information stored in the emitting amount management table, the control unit 11 then creates a list including the company names sorted in the lower order of procurement cost regarding the emitting allowance, the extra emitting amounts, and the procurement costs (step S154). Concretely, the control unit 11 reads out the emitting amount assigned to each company, the predicted emitting amount and the procurement cost, from the emitting amount management table. Then, the control unit 11 subtracts the predicted emitting amount from the emitting amount assigned to each company, thereby calculating the extra emitting amount, i.e., the extra of emitting allowances. Then, the control unit 11 creates the list including the company names sorted in the lower order of procurement cost, based on the procurement cost associated with each company ID. In addition, the control unit 11 displays the list of extra emitting amounts and procurement costs, together with the company names. The control unit 11 creates the list information for displaying the created list on the communication apparatus 2, and sends the created list information to the communication apparatus 2 of said one company, i.e., to the communication apparatus 2 regarding the company ID received at the step S153 (step S155). The communication apparatus 2 receives the list information sent from the emitting amount processing apparatus 1, and displays the list of purchase sources based on the received list information (step S156).

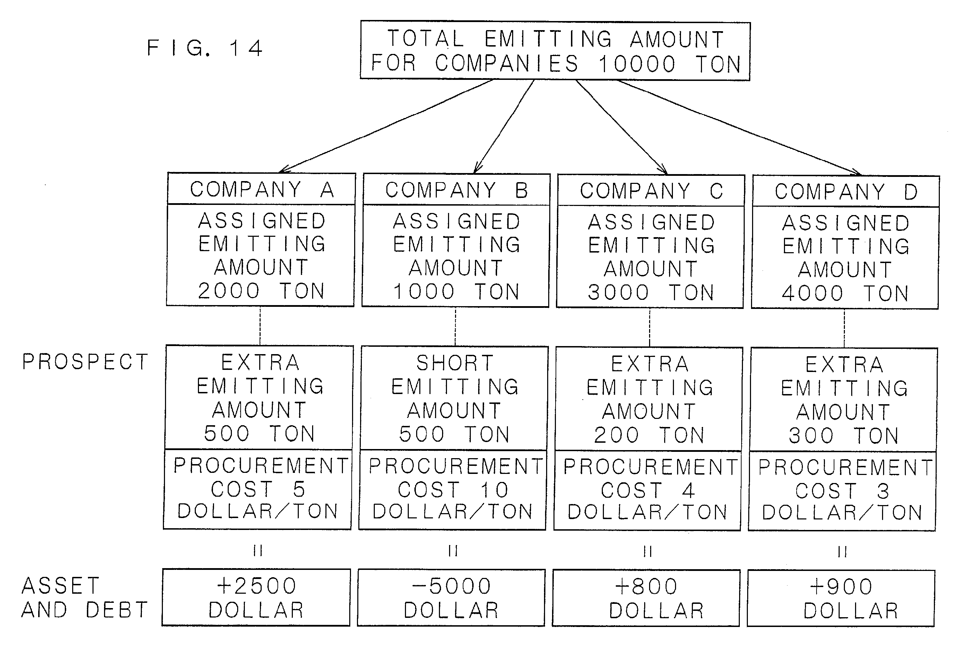

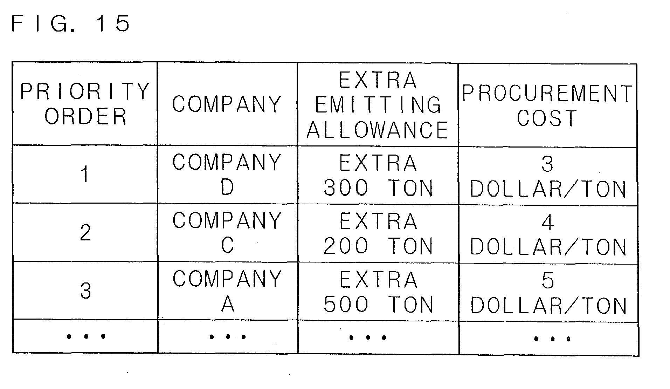

FIG. 14 is an explanation view conceptually showing a prospect regarding the extra and shortage of emitting amount in each company and showing an asset value of emitting amount. FIG. 15 is a schematic view conceptually showing the list of purchase sources in which company names are sorted in a lower order of purchase cost for the emitting allowance. In the example shown in FIG. 14, the companies A, C and D has extra emitting amounts 500 ton, 200 ton, and 300 ton, although the company B lacks 500 ton of emitting amount. In addition, the procurement costs required for the unit of emitting allowance in the countries where the companies A, B, C and D are located are 5 dollar/ton, 10 dollar/ton, 4 dollar/ton and 3 dollar/ton, respectively. Thus, when the extra of emitting allowance is treated as the asset and the shortage of emitting allowance is treated as the debt, the asset and debt of respective companies A, B, C and D regarding the emitting allowance are 500 ton x 5 dollar/ton = + 2500 dollar, 500 ton x 10 dollar/tom = - 5000 dollar, 200 ton x 4 dollar/ton = + 800 dollar, and 300 ton x 3 dollar/ton = + 900 dollar, respectively. Although the market price of actual emitting allowance from April 2008 to March 2009 changes between about 10 dollar/ton to 40 dollar/ton, it is explained with the assumed virtual market prices, 5 dollar/ton, 10 dollar/ton, 4 dollar/ton and 3 dollar/ton because of simplifying the explanation.

When the company B requests the list of purchase sources to the emitting amount processing apparatus 1 in order to purchase the emitting allowance in the condition described above, the list of purchase sources as shown in FIG. 15 is displayed on the communication apparatus 2 of the company B. The list of purchase sources includes the companies, other than the company requesting this list, which keep extra emitting allowances, and the included companies are sorted in a lower order of the procurement cost. The priority order as for the purchase source, extra emitting allowance and procurement cost are displayed in association with each company.

Returning to FIG. 13, after the completion of the process at the step S156, the communication apparatus 2 accepts the purchase source of emitting allowance in the list of purchase sources and the emitting amount to be purchased (step S157). Generally, the company B purchases the emitting allowance preferentially from the company whose procurement cost is lower. Then, the communication apparatus 2 sends the identification information of accepted purchase source company, its own identification information and the information representing the emitting amount to be purchased, to the emitting amount processing apparatus 1 (step S158).

The control unit 11 of the emitting amount processing apparatus 1 receives the identification information and the information representing the emitting amount to be purchased which are sent from the communication apparatus 2 (step S159). Then, the control unit 11 sends the selling request information representing the request of selling the emitting amount, to the communication apparatus 2 of purchase source company that wants the selling of emitting amount (step S54). After that, the similar processes to the step S55 to step S61 of the present embodiment described above are performed.

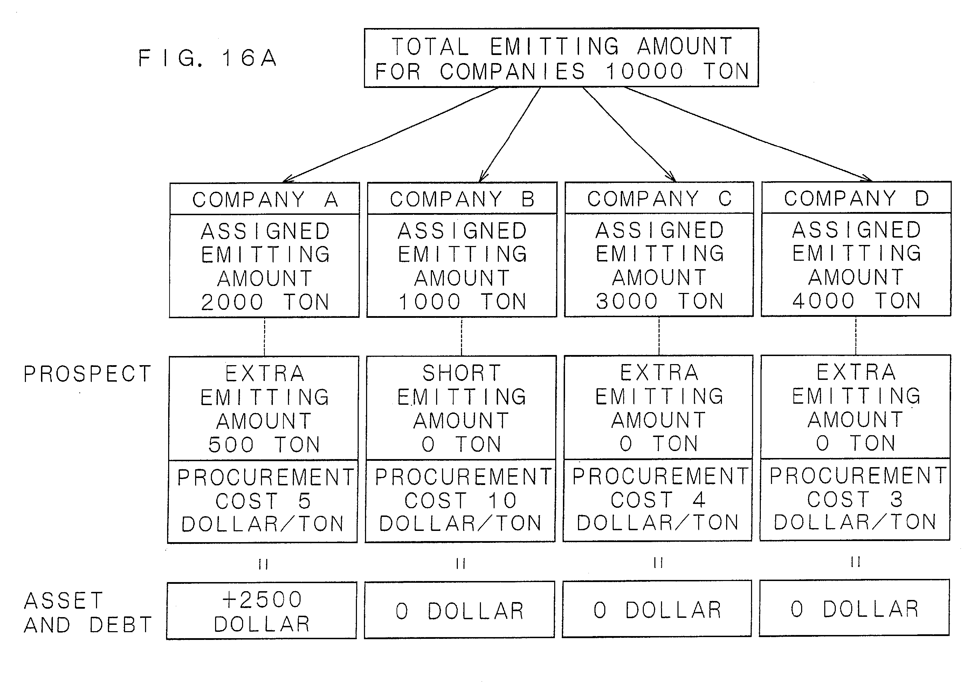

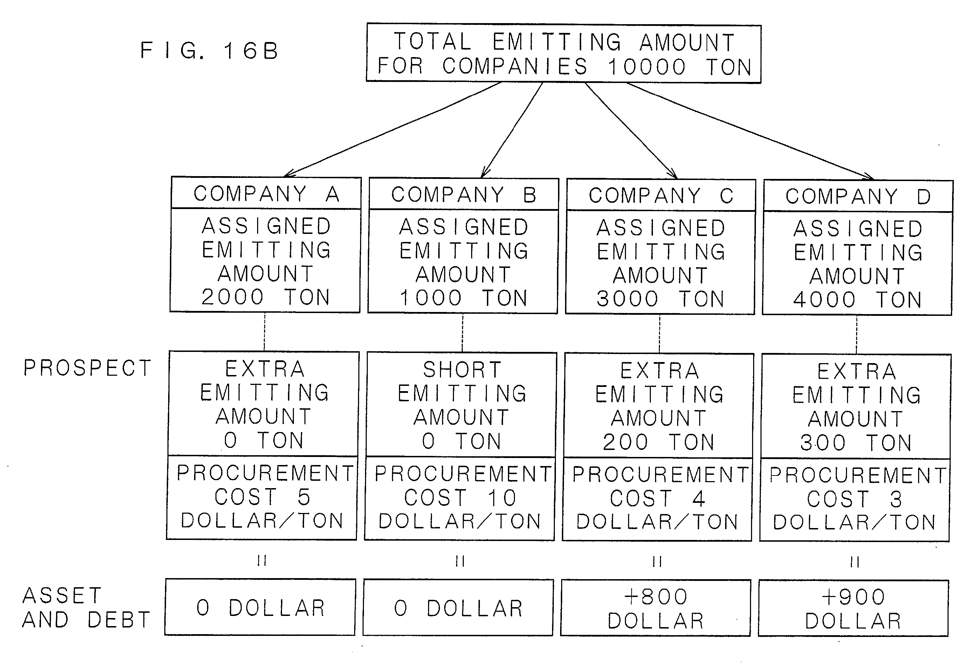

FIG. 16A and FIG. 15B are explanation views conceptually showing the asset value of emitting amount after the trade of emitting allowance. FIG. 16 A shows the case that the company B having the shortage of emitting allowances purchases the emitting allowances from the company C and company D whose procurement costs for the emitting allowance are lower. FIG. 16B shows the case that the company B purchases from the company A whose procurement cost for the emitting allowance is higher. In the case that the emitting allowances are purchased from the company C and company D whose procurement costs are lower as shown in FIG. 16A, the gross asset regarding the emitting allowances held by the whole of this group configured with plural companies A, B, C and D becomes 2500 dollar. On the other hand, when the emitting allowance is purchased from the company A whose procurement cost is higher, the gross asset regarding the emitting allowances held by the whole of this group becomes 1700 dollar. Each company purchases the emitting allowance preferentially from the company whose procurement cost for the emitting allowance is lower as described above, and thus it is possible to maximize the asset value regarding the emitting allowances for the whole of this group.

Because the purchase of emitting allowance is performed by one company as the representative to the group, the procurement cost is the same at that time. However, the time for procuring the emitting allowance may be different on respective companies in the group. In addition, a company in the group may procure independently. In these cases, the procurement cost for the emitting allowance always changes because not only the time but also the location is different from each other. Based on such a reason, the procurement costs may consequently become different on respective companies in the group.

With the emitting amount processing system according to the alternative embodiment 1, when one company purchases emitting allowance from another company, it is possible to suggest the purchase source of emitting allowance to said one company so as to maximize the gross asset of plural companies configuring the group, and it is possible to implement the financially efficient trade of emitting allowance in the companies of the group.

Although the alternative embodiment is explained as an example to display the list of purchase sources in which the company names are sorted in the lower order of procurement cost at the step S154-step S156, it may be configured that information merely representing the procurement cost of each company is sent to the communication apparatus 2.

In addition, although the alternative embodiment is explained as an example to manually perform the final decision of the purchase source for the emitting allowance, it may be configured to automatically decide the purchase source for the emitting allowance and request the selling of emitting allowance to each company.

It should be understood that the embodiments described above are only illustrative but not limitative. The scope of the invention is defined in the claims and includes all changes that fall within metes and bounds of the claims or equivalence of such metes and bounds thereof, but not limited to the above description.

### [Description of Reference Numerals]

- 1: emitting amount processing apparatus
- 2: communication apparatus
- 3: first communication network
- 4: external emitting amount trading apparatus
- 11: control unit
- 14: storing unit
- 15: input unit
- 16: display unit
- 17: output unit
- 18: first communicating unit
- 19: second communicating unit

## Claims

1. An emitting amount processing system having communication apparatuses that relate respectively to plural entities and an emitting amount processing apparatus that is connected to each of the communication apparatuses through a communication network and processes emitting amount information representing emitting allowances of greenhouse gas respectively regarding the plural entities, wherein
the emitting amount processing apparatus comprises:
a storing means for storing emitting amount information representing an emitting allowance of greenhouse gas regarding each entity, in association with identification information identifying each of the plural entities,
each of the communication apparatuses comprises:
a means for accepting emitting amount purchase information representing an emitting amount regarding an emitting allowance of greenhouse gas purchased from an entity regarding another of the communication apparatuses; and
a means for sending the accepted emitting amount purchase information and its own identification information to the emitting amount processing apparatus, and
the emitting amount processing apparatus further comprises:
a means for receiving the emitting amount purchase information and the identification information sent from the communication apparatus;
a means for adding an emitting amount represented by the received emitting amount purchase information to an emitting amount represented by emitting amount information associated with the received identification information; and
a means for subtracting an emitting amount represented by the received emitting amount purchase information from an emitting amount represented by emitting amount information associated with identification information of said another of the communication apparatuses.

2. The emitting amount processing system according to Claim 1, wherein
the emitting amount processing apparatus comprises:
a means for storing a cost required by each entity for procuring a predetermined amount of emitting allowance; and
a means for sending information, to one of the communication apparatuses, representing a cost required for procuring a predetermined amount of emitting allowance by an entity regarding another of the communication apparatuses.

3. The emitting amount processing system according to Claim 2, wherein
the emitting amount processing apparatus comprises:
a means for sending information, to said one of the communication apparatuses, as for suggesting said another of the communication apparatuses in a lower order of the cost.

4. The emitting amount processing system according to any one of Claims 1 to 3, wherein
the emitting amount processing apparatus comprises:
a means for accepting emitting amount information representing an emitting amount purchased from an entity out of the plural entities; and
an adding means for dividing an emitting amount represented by the accepted emitting amount information and adding to an emitting amount represented by emitting amount information associated with the identification information of the plural entities.

5. The emitting amount processing system according to any one of Claims 1 to 4, wherein
the emitting amount processing apparatus comprises:
a means for accepting emitting amount information representing an emitting amount sold to an entity out of the plural entities; and
a means for dividing an emitting amount represented by the accepted emitting amount information and subtracting from an emitting amount represented by emitting amount information associated with the identification information of the plural entities.

6. An emitting amount processing apparatus that processes emitting amount information representing emitting allowances of greenhouse gas regarding plural entities, comprising:
a storing means for storing emitting amount information representing an emitting allowance of greenhouse gas regarding each entity, in association with identification information identifying each of the plural entities;
a means for receiving identification information of one of the plural entities and for receiving emitting amount purchase information representing an emitting amount regarding an emitting allowance of greenhouse gas purchased from another of the plural entities;
a means for adding an emitting amount represented by the received emitting amount purchase information to an emitting amount represented by emitting amount information associated with the received identification information of said one of the entities; and
a means for subtracting an emitting amount represented by the received emitting amount purchase information from an emitting amount represented by emitting amount information associated with identification information of said another of the plural entities.

7. An emitting amount processing method for processing emitting amounts of plural entities, by making use of communication apparatuses that relate respectively to the plural entities and an emitting amount processing apparatus that is connected to each of the communication apparatuses through a communication network and processes emitting amount information representing an emitting amount regarding greenhouse gas assigned to each of the plural entities, wherein
the emitting amount processing apparatus comprises:
a step of storing emitting amount information representing an emitting allowance of greenhouse gas regarding each entity in association with identification information identifying each of the plural entities, into a storing means,
each of the communication apparatuses comprises:
a step of accepting emitting amount purchase information representing an emitting amount regarding an emitting allowance of greenhouse gas purchased from an entity regarding another of the communication apparatuses; and
a step of sending the accepted emitting amount purchase information and its own identification information to the emitting amount processing apparatus, and
the emitting amount processing apparatus further comprises:
a step of receiving the emitting amount purchase information and the identification information sent from the communication apparatus;
a step of adding an emitting amount represented by the received emitting amount purchase information to an emitting amount represented by emitting amount information associated with the received identification information; and
a step of subtracting an emitting amount represented by the received emitting amount purchase information from an emitting amount represented by emitting amount information associated with identification information of said another of the communication apparatuses.
